# FASCICULE DE BREVET EUROPEEN

(11) **EP 1 622 832 B1**
(45) Date de publication et mention de la délivrance du brevet: **20.03.2019**
(21) Numéro de dépôt: 04742441.1
(22) Date de dépôt: 06.04.2004
(51) Int. Cl.: C01G 1/02, B82Y 30/00, C01G 9/02, C01G 15/00

(54) **PROCÉDÉ DE PRÉPARATION D'UNE COMPOSITION DE NANOPARTICULES D'AU MOINS UN OXYDE MÉTALLIQUE CRISTALLIN**
VERFAHREN ZUR HERSTELLUNG EINER ZUSAMMENSETZUNG VON NANOPARTIKELN, MINDESTENS EIN KRISTALLINES METALLOXID ENTHALTEND
METHOD FOR THE PREPARATION OF A COMPOSITION OF NANOPARTICLES OF AT LEAST ONE CRYSTALLINE METAL OXIDE

(30) Priorité: 07.04.2003 FR 0304285
(43) Date de publication de la demande: 08.02.2006
(73) Titulaire: CENTRE NATIONAL DE LA RECHERCHE SCIENTIFIQUE -CNRS-, 75016 Paris (FR)
(72) Inventeur: KAHN, Myrtil, F-31400 Toulouse (FR); MONGE, Miguel, 26007 LOGRONO (La Rioja) (ES); MAISONNAT, André, F-31120 Roquette (FR); CHAUDRET, Bruno, F-31120 Vigoulet Auzil (FR)
(74) Mandataire: Lavoix
(86) Numéro de dépôt international: PCT/FR2004/000850
(87) Numéro de publication internationale: WO 2004/092069

(56) Documents cités:
- EP-A1- 0 229 657
- K. SOULANTICA, A. MAISONNAT, M.-C. FROMEN, M.-J. CASANOVE, P. LECANTE, B. CHAUDRET: "Synthesis and self-assembly of Monodisperse Indium Nanoparticles Prepared from the Organometallic Precursor [InCp]" ANGEWANDTE CHEMIE INT. ED., vol. 40, no. 2, 2001, pages 448-451, XP002266276 Weinheim
- C. NAYRAL, E. VIALA, P. FAU, F. SENOCQ, J.-J. JUMAS, A. MAISONNAT, B. CHAUDRET: "Synthesis of Tin and Tin Oxide Nanoparticles of Low Size Dispersity for Application in Gas Sensing" CHEMISTRY AN EUROPEAN JOURNAL, vol. 6, no. 22, 2000, pages 4082-4090, XP002304770 WEINHEIM cité dans la demande
- K. SOULANTICA, A. MAISONNAT, F. SENOCQ, M.-C. FROMEN, M.-J. CASANOVE, B. CHAUDRET: "Selective Synthesis of Novel In and In3Sn Nanowires by an Organometallic Route at Room Temperature" ANGEWANDTE CHEMIE INT. ED., vol. 40, no. 16, 2001, - 2984 pages 2983-2986, XP002266277 weinheim
- C. NAYRAL, E. VIALA, V. COLLIÈRE, P. FAU, F. SENOCQ, A. MAISONNAT, B. CHAUDRET: "Synthesis and use of a novel Sno2 nanomaterial for gas sensing" APPLIED SURFACE SCIENCE, vol. 164, 2000, pages 219-226, XP002266278
- C. NAYRAL, T. OULD-ELY, A. MAISONNAT, B.CHAUDRET, P. FAU, L. LESCOUZÈRES, A. PEYRE-LAVIGNE: "A Novel Mechanism for the Synthesis of Tin/Tin oxide nanoparticles of low size Dispersion and of nanostructured SnO2 for the sensitive layers of Gas Sensors" ADVANCED MATERIALS, vol. 11, no. 1, 1999, pages 61-63, XP002266279
- CORDENTE N ET AL: "SYNTHESIS AND MAGNETIC PROPERTIES OF NICKEL NANORODS" NANO LETTERS, AMERICAN CHEMICAL SOCIETY, WASHINGTON, DC, US, vol. 1, no. 10, 30 août 2001 (2001-08-30), pages 565-568, XP001089845 ISSN: 1530-6984
- DING Y ET AL: "NANOSCALE MAGNESIUM HYDROXIDE AND MAGNESIUM OXIDE POWDERS: CONTROL OVER SIZE, SHAPE, AND STRUCTURE VIA HYDROTHERMAL SYNTHESIS" CHEMISTRY OF MATERIALS, AMERICAN CHEMICAL SOCIETY, WASHINGTON, US, vol. 13, no. 2, 1 février 2001 (2001-02-01), pages 435-440, XP001005173 ISSN: 0897-4756
- DATABASE WPI Section Ch, Week 200029 Derwent Publications Ltd., London, GB; Class A25, AN 2000-329726 XP002266280 & CN 1 245 777 A (GUANGZHOU INST CHEM CHINESE ACAD) 1 mars 2000 (2000-03-01)
- MOONSUB SHIM AND PHILIPPE GUYOT-SIONNEST: "Organic-Capped ZnO Nanocrystals: Synthesis and n-Type Character", J. AM. CHEM. SOC., vol. 123, 2001, pages 11651-11654,
- C.L. CARNES, K.J. KLABUNDE: "Synthesis, Isolation and Chemical Reactivity Studies of Nanocrystalline Zinc Oxide", LANGMUIR, vol. 16, no. 8, 2000, pages 3764-3772, DOI: 10.1021/la991498p

## Description

L'invention concerne un procédé de préparation d'une composition de nanoparticules d'au moins un oxyde métallique cristallin par réaction chimique d'au moins un précurseur organométallique. Elle vise en particulier la préparation d'une composition de nanoparticules dispersées d'au moins un oxyde métallique cristallin de formes et dimensions au moins sensiblement uniformes. Elle s'étend aux nouvelles compositions de nanoparticules dispersées (colloïdales) de formes et dimensions au moins sensiblement uniformes d'au moins un oxyde métallique cristallin ainsi obtenues.

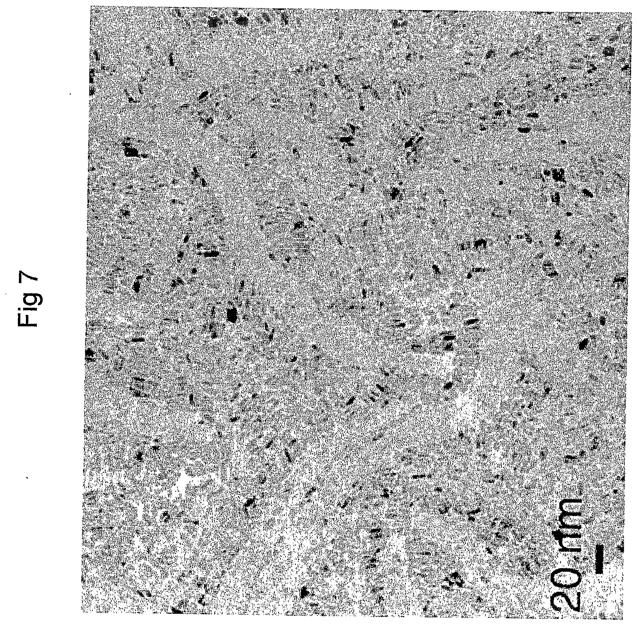

Compte tenu de leurs propriétés spécifiques ouvrant la voie à de nombreuses applications industrielles potentielles, les oxydes métalliques cristallins, notamment sous forme nanoparticulaire, font l'objet d'intenses recherches depuis de nombreuses années. Le document« Ceramics »Abbas Khaleel and Ryan M. Richards, Nanoscale Materials in Chemistry, Kenneth J. Klabunde, 2001, John Wiley and Sons, pp 85-120, brosse un état de la technique des différentes méthodes envisagées jusqu'à ce jour pour la préparation d'oxydes métalliques cristallins nanoparticulaires, à savoir :
- les méthodes physiques et/ou aérosol (condensation de vapeur ou de gaz; pyrolyse par jet; décomposition thermochimique ou par flamme ; évaporation thermique ; vaporisation sous vide ; évaporation par laser) : ces méthodes physiques procurent en général de faibles rendements, peuvent générer des produits indésirables, nécessitent des températures élevées et des appareillages complexes et coûteux ;
- les méthodes chimiques :
   - sol-gel : cette méthode consiste à réaliser l'hydrolyse de précurseurs de type alcoolate dans l'eau et/ou un alcool en présence d'un catalyseur (un acide ou une base permettant d'accélérer l'hydrolyse de la fonction alcoxysilane en silanol ou silyléther, notamment un acide minéral ou une base minérale tel que HCI, NaOH, KOH), produisant par condensation un gel d'hydroxydes métalliques, puis une poudre par séchage du gel, et enfin des oxydes par calcination ultérieure ; ainsi, cette méthode nécessite de nombreuses étapes successives incluant des traitements thermiques et n'aboutit en général qu'à des matériaux nanostructurés, mais non à des nanoparticules bien dispersées. Le document C.L.Carnes, K.J. Klabunde, Langmuir 2000, 16, 3764-3771, décrit un procédé sol-gel permettant la formation d'oxyde de zinc nanocristallin. Ce procédé comporte une première étape de formation d'une solution blanche colloïdale d'oxyde de zinc, puis une étape de formation d'une poudre d'oxyde de zinc, et enfin un traitement d'activation par la chaleur pour former une poudre d'oxyde de zinc nanocristallin (NC-ZnO). A ce niveau, les particules d'oxyde de zinc nanocristallin s'agrègent pour former des particules sphériques plus larges, qui sont sous la forme d'une poudre blanche comme cela est montré en figure 7C. La figure 7C montre que les particules sont sphériques.
   - micro-émulsion : bien que prometteuse, cette méthode génère des rendements faibles et nécessite de grandes quantités de solvant, une réaction biphasique et des calcinations ;
   - synthèse chimique à basse température en solution et précipitation : ces méthodes nécessitent des étapes finales de séparation sous vide et/ou calcination à haute température et ne permettent aucun contrôle de la forme et de la taille des particules qui sont en général non dispersées ;
   - synthèse mécanochimique : cette méthode ne permet pas de préparer des nanoparticules dispersées de formes et de dimensions uniformes et prédéterminées.

Par ailleurs, EP-0947245 décrit un procédé pour préparer des colloïdes métalliques à partir d'un précurseur organométallique ([Sn(N(CH₃)₂)₂]₂ pour l'étain) solubilisé dans un solvant légèrement hydraté tel que l'anisol ou le toluène commercial, chauffage de cette solution maintenue sous gaz inerte à au moins 130°C pour entraîner la décomposition du précurseur, puis suppression des sous-produits organiques par au moins trois étapes de lavage par du solvant pur. On obtient des nanoparticules d'étain entourées d'une pellicule protectrice d'oxyde d'étain. Ce colloïde métallique peut être utilisé pour préparer une couche sensible d'oxyde d'étain. Pour ce faire, on forme tout d'abord une couche de colloïde métallique, par exemple selon la méthode de dépôt par rotation, que l'on soumet à une oxydation en deux étapes dont une première à 200°C et une deuxième à 650°C, puis à un recuit à 450°C, pour former une couche de particules d'oxyde d'étain cristallin de 0,02 µ de diamètre. On obtient ainsi une couche sensible de particules d'oxyde d'étain sphériques agglomérées.

Les publications « Synthesis and characterization of monodisperse zinc and zinc-oxide nanoparticles from the organometallic precursor [Zn(C6H11)2] » F. Rataboul et al., Journal of Organometallic Chemistry 643-644 (2002) 307-312; et «New procédure towards well-dispersed nickel oxide nanoparticles of controlled size » N. Cordente et al., C.R. Acad. Sci. Paris, chimie/chemistry 4 (2001) 143-148 décrivent l'obtention de colloïdes de particules métalliques mixtes (Zn/ZnO ou Ni/NiO) avec un coeur métallique et une couche d'oxyde par décomposition thermique sous gaz inerte d'un précurseur organométallique, de façon similaire à EP-0947245. La publication F. Rataboul enseigne que des nanoparticules de Zn/ZnO dispersées dans le PVP (polyvinylpyrolidone) peuvent être obtenues. Les particules obtenues en l'absence de PVP, c'est-à-dire non dispersées, sont oxydées à l'air pendant 3h à 300°C puis 3h à 600°C. On obtient une phase de nanoparticules d'oxyde de zinc pur de structure hexagonale wurtzite sans coalescence mais non dispersées. La publication N. Cordente et *al.* décrit l'obtention de nanoparticules Ni/NiO dispersées dans le PVP, et indique que des essais préliminaires ont été effectués pour l'oxydation de ces particules à 100°C (moins de 130°C pour éviter la décomposition du polymère de dispersion PVP) pendant deux semaines. Mais, ce document admet que cette oxydation ne permet pas de produire des nanoparticules d'oxyde NiO pur, même si les résultats obtenus sont considérés par les auteurs comme prometteurs. Néanmoins, en fait, il s'avère que si le traitement d'oxydation est suffisamment important pour produire des particules d'oxyde, le polymère de dispersion est détruit et les particules oxydées ne sont plus à l'état dispersé.

Le document Moonsub et al (« Organic-Capped ZnO Nanocrystals: Synthesos and n-Ttpe Character », J.Am.Chem.Soc. 2001, 123, 11651-11654) décrit un procédé de préparation de particules nanométriques d'oxyde de zinc comprenant les étapes de préparation d'une solution d'octylamine oxygénée, injection d'une solution de diéthyl de zinc dans un milieu de décane anhydre dans la solution d'octylamine oxygénée et c) injection du mélange de l'étape dans de l'oxyde de trioctylphosphine dégasé à 200°C. les particules ainsi obtenues sont sphériques.

Le document Soulantica et al. (« Synthesis and Self-Assembly of Monodisperse Indium Nanoparticles Prepared from the Organometallic Precursor [ln(η5-C5H5)]", Angew. Chem. Int. Ed. 2001, 40, No.2), décrit une péparation de nanoparticules d'indium à partir d'un précurseur organométallique, lors de laquelle les auteurs observant inopinément que les particules d'indium obtenues s'oxydent partiellement à l'air conduisant à quelques particules d'oxyde d'indium. Ce procédé ne permet donc pas d'obtenir des particules d'oxyde métallique avec un rendement satisfaisant.

Le document Nayral et al. (« Sythesis of Tin and Tin Oxide Nanoparticles of Low Size Dispersity for Application in Gas Sensing », Chem. Eur. J. 2000, 6, No.22) décrit un procédé de préparation de nanoparticules de SnO2 à partir d'un précurseur organométallique, dans lequel on décompose thermiquement le précurseur organométallique en particules métalliques dans un solvant, on extrait les particules métalliques du solvant et on réalise leur oxydation thermale en SnO2. Ce procédé conduit à des particules agglomérées de SnO2 et ne permet pas d'obtenir des nanoparticules d'oxydes métalliques cristallins pures et à l'état dispersé.

Le document EP0229657 décrit une composition de particules d'au moins un oxyde métallique (oxyde de zirconium) dispersées uniforme et présentant une anisotropie de forme, avec une largeur de 4nm et une longueur de 10 nm.

Ainsi, aucune des méthodes connues sus-citées ne permet d'obtenir directement des nanoparticules d'oxyde(s) métallique(s) cristallin(s) pures. De plus, aucune des méthodes connues ne permet d'obtenir de telles nanoparticules se présentant sous forme dispersée et ayant de formes et des dimensions homogènes, au moins sensiblement uniformes, c'est-à-dire correspondant à une distribution unimodale (répartie autour d'une seule valeur moyenne principale), et notamment sensiblement monodisperses (c'est-à-dire avec une faible dispersion autour de la valeur moyenne).

En outre, la plupart des méthodes connues sont lourdes, nécessitent des matériels complexes et de haute technologie et/ou de nombreuses étapes successives, dont des étapes de traitement thermique et des étapes de séparation (lavage, purification...), produisent de grandes quantités de sous-produits ou rejets (notamment des solvants) polluants, et sont peu appropriées à une exploitation dans des conditions économiques rentables à l'échelle industrielle.

Par ailleurs, aucune méthode connue ne permet d'obtenir des nanoparticules d'oxyde(s) métallique(s) cristallin(s), se présentant sous forme dispersée, et dont la forme peut présenter une anisotropie de forme (non sphériques), par exemple allongée (bâtonnets, fils, rubans...). Or, dans certaines applications industrielles, l'obtention de nanoparticules de formes et de dimensions uniformes et contrôlées, se présentant sous forme dispersée, et pouvant présenter une anisotropie de forme (notamment allongées) est importante.

Dans tout le texte, on adopte la terminologie suivante :
- nanoparticule : toute particule quelle que soit sa forme, présentant au moins une largeur et une épaisseur toutes deux inférieures à 100nm, typiquement comprises entre 1nm et 20nm ;
- précurseur organométallique : toute molécule ou composé de coordination contenant au moins un groupement organique lié à au moins un atome métallique (métal de transition ou élément des groupes principaux) par un atome de carbone ou un hétéro-atome à l'exclusion de l'oxygène (choisi notamment parmi N, P, As, Si, S, Se, Te), de ce groupement organique; un précurseur organométallique spontanément réactif à l'oxydation est un précurseur qui se transforme de manière exothermique en oxyde alors qu'il est mis seul en présence d'au moins un oxydant tel que l'air ambiant;

- oxydant : tout agent permettant la transformation d'un précurseur en oxyde, par une réaction chimique, dite réaction d'oxydation;
- milieu solvant non aqueux : toute composition apte à former une solution liquide lorsqu'elle est placée au contact d'au moins un composé tel qu'un précurseur organométallique; cette composition est non aqueuse en ce sens que l'eau ne fait pas office d'agent solvant dans cette composition, qui peut néanmoins comprendre des traces d'eau ; elle peut se présenter à l'état initialement liquide, ou au contraire ne passer à l'état liquide qu'après contact avec le(les) composé(s) à solubiliser; elle peut être simple, c'est-à-dire formée d'un seul composé, ou au contraire complexe et renfermer plusieurs composés; en particulier, elle peut renfermer non seulement un ou plusieurs composé(s) faisant office d'agent solvant, mais aussi tout autre composé non consommé par la réaction d'oxydation sensiblement neutre vis-à-vis de la dissolution du(des) précurseur(s) organométallique(s), et jouant un rôle ou non dans la réaction d'oxydation;
- solution liquide colloïdale : toute solution limpide de nanoparticules solides dispersées dans un liquide (une solution liquide colloïdale diffuse la lumière).

Dans ce contexte, l'invention vise à proposer une composition d'au moins un oxyde métallique cristallin, notamment sous forme de nanoparticules se présentant sous forme dispersée, et ayant des formes et dimensions au moins sensiblement uniformes, et un procédé de préparation d'une telle composition.

L'invention vise aussi plus particulièrement à permettre l'obtention d'une telle composition avec des formes et dimensions des particules qui peuvent être prévisibles et contrôlées de façon précise, notamment qui peuvent présenter une anisotropie de forme, en particulier être allongées (disques, rubans, fils, bâtonnets, sphères ...). L'invention vise aussi à permettre l'obtention d'une telle composition pouvant se présenter sous la forme d'une solution liquide colloïdale.

L'invention vise aussi en particulier à proposer un procédé de préparation extrêmement simple, ne nécessitant pas d'appareillage complexe, permettant l'obtention de nanoparticules dispersées d'oxyde(s) métallique(s) cristallin(s) directement et en peu d'étapes, compatible avec une exploitation à l'échelle industrielle dans des conditions économiques satisfaisantes. L'invention vise en particulier à proposer un procédé exempt de traitement thermique et qui ne produit pas de rejets polluants en quantités importantes.

Pour ce faire, l'invention propose un procédé de préparation d'une composition de nanoparticules d'au moins un oxyde métallique cristallin à partir d'au moins un précurseur organométallique, caractérisé en ce que :
- on choisit un(des) précurseur(s) spontanément réactif(s) à l'oxydation dans le groupe des précurseurs organiques des éléments comprenant le zinc, le cadmium, le bore, l'aluminium, le gallium, l'indium, le thallium, le germanium, l'étain, le titane, le zirconium, l'hafnium, les lanthanides (Ce, Pr, Nd, Sm, Eu, Gd, Tb, Dy, Ho, Er, Tm, Yb, Lu), le scandium, l'yttrium, le silicium, le bismuth et les autres métaux de transition,
- on réalise une solution liquide de ce(ces) précurseur(s) dans un milieu solvant non aqueux,
- on met cette solution liquide en contact avec au moins un oxydant dans des conditions réactionnelles adaptées pour entraîner directement la production de nanoparticules d'oxyde(s) métallique(s) cristallin(s), dans lequel on réalise l'oxydation à pression ambiante et à une température comprise entre 0 et 50°C, ladite température étant inférieure à 50°C.

Les conditions réactionnelles choisies comprennent notamment:
le choix du milieu solvant non aqueux ;
les concentrations initiales ;
la température réactionnelle ;
la pression réactionnelle.

Le procédé de l'invention consiste ainsi à réaliser une réaction chimique d'oxydation directe d'au moins un précurseur organométallique en solution liquide. Il se distingue des procédés sol-gel notamment en ce que l'on réalise l'oxydation directe du(des) précurseur(s) spontanément réactif(s), qui n'est(ne sont) pas un(des) alcoolate(s), dans un milieu non aqueux, sans catalyseur (tel qu'un acide minéral ou une bas minérale), sans passer par une étape d'hydrolyse contrôlée entraînant la formation d'hydroxydes formant un gel (polymère inorganique), et ne nécessitant pas d'étape ultérieure de calcination pour obtenir les oxydes à l'état cristallin. Dans un procédé selon l'invention, on obtient en effet les nanoparticules d'oxyde(s) métallique(s) cristallin(s) par la seule mise en contact de la solution liquide avec un milieu oxydant, sans étape ultérieure, notamment sans étape de calcination.

Les inventeurs ont constaté avec surprise qu'il est possible d'obtenir directement sous forme nanoparticulaire l'oxyde métallique à l'état cristallin sans passer par des particules métalliques, à partir d'un précurseur organométallique oxydé en solution liquide à condition de choisir un précurseur spontanément réactif à l'oxydation et avec des conditions réactionnelles appropriées d'obtention d'une oxydation douce. Le procédé selon l'invention permet aussi un contrôle de la forme, de l'homogénéité des nanoparticules (toutes la même forme), de la taille et de la répartition en taille des nanoparticules, et ceci en une seule étape dans un milieu solvant.

L'oxydation à pression ambiante et à une température comprise entre 0°C et 200°C est décrite.

On décrit l'oxydation à pression ambiante et à une température inférieure à 50°C -notamment à température ambiante-. Ainsi, le procédé selon l'invention est d'une extrême simplicité.

Aucune explication claire ne peut être donnée par les inventeurs à ces résultats surprenants, qui vont à l'encontre des connaissances antérieures.

En particulier, il était considéré jusqu'à maintenant nécessaire, pour obtenir des nanoparticules de matériaux semi-conducteurs cristallins, de passer par une composition de nanoparticules métalliques. En effet, la croissance cristalline requiert soit un passage réversible d'une phase fluide (solution, fusion ou vapeur) à la phase solide, soit une mobilité importante dans la phase solide, et ce pour permettre aux atomes, ions et molécules d'adopter des positions correspondant au développement des réseaux cristallins. Or, si une composition de nanoparticules purement métalliques autorise en son sein les transports d'atomes et les phénomènes de coalescence, et se comporte comme un solide «pseudo-fondu», tel n'est pas le cas des matériaux semi-conducteurs tels que les oxydes qui forment des réseaux cristallins rigides empêchant ces transports à basse température. Ainsi, rien ne pouvait laisser présager qu'il était possible d'aboutir directement à des nanoparticules d'oxyde métallique cristallin.

Au contraire, il était jusqu'à maintenant considéré que la croissance de cristaux semi-conducteurs, notamment d'oxydes, nécessite la mise en oeuvre de hautes températures (plus de 1000°C à l'état fondu ou plus de 500°C avec les procédés de dépôt chimique d'organométallique en phase vapeur (OMCVD)).

Dès lors, l'obtention d'oxyde(s) métallique(s) cristallin(s) nanoparticulaire(s) par simple mise en contact d'une solution liquide d'au moins un précurseur organométallique avec l'air ambiant était complètement imprévisible.

Le procédé de l'invention extrêmement simple, peu coûteux, en une seule étape réactionnelle, procure ainsi des avantages considérables et déterminants par rapport à l'ensemble des procédés envisagés jusqu'à maintenant pour l'obtention d'oxydes métalliques cristallins.

Par ailleurs, a posteriori, les inventeurs ont émis l'hypothèse que les résultats surprenants obtenus avec le procédé de l'invention pourraient s'expliquer en partie par le fait que la réaction d'oxydation est favorisée par l'exothermicité de la décomposition du précurseur organométallique. Ainsi, contrairement à ce qui était antérieurement admis, il est possible, en une seule étape de décomposer un précurseur organométallique pour former directement un oxyde, et ce serait le dégagement de chaleur de cette décomposition qui pem1 etlrait d'obtenir un oxyde cristallin.

Compte tenu de ce qui précède, le procédé est décrit avec tous les éléments pour lesquels il existe un précurseur organométallique spontanément réactif à l'oxydation et pouvant être placé en solution liquide.

Parmi ces éléments, on peut citer : le zinc, le cadmium, le bore, l'aluminium, le gallium, l'indium, le thallium, le germanium, l'étain, le titane, le zirconium, l'hafnium, les lanthanides (Ce, Pr, Nd, Sm, Eu, Gd, Tb, Dy, Ho, Er, Tm, Yb, Lu), le scandium, l'yttrium, le silicium, le bismuth et les autres métaux de transition.

A titre d'exemples de précurseurs organométalliques spontanément réactifs à l'oxydation pouvant être utilisés dans un procédé selon l'invention, on peut citer les composés complexes de coordination comprenant au moins l'un des éléments sus-cités et au moins un groupement choisi parmi: les amidures, les alkyles, les aryles, les cyclopentadienyles, les oléfines, les polyoléfines, les alcynes, les alcynines, les silyles.

Encore plus surprenant est le fait qu'il est possible d'obtenir de façon sélective, reproductive et quantitative, l'oxyde métallique cristallin à l'état de nanoparticules parfaitement dispersées (non agglomérées) et ayant des formes et dimensions au moins sensiblement uniformes, c'est-à-dire selon une distribution unimodale, notamment sensiblement homogène (faible dispersion), et pouvant même être monodisperses.

De plus, les inventeurs ont constaté que le milieu solvant et sa structure permettent de contrôler la taille, la forme et la distribution en taille des nanoparticules.

Pour ce faire, avantageusement et selon l'invention, ledit milieu solvant comprend au moins un composé, dit ligand, choisi parmi les bases et les acides.

Il a été constaté qu'il est possible de faire varier précisément et de contrôler la forme et les dimensions des nanoparticules d'oxyde(s) obtenues selon le choix du(des) ligand(s) et les différentes conditions réactionnelles mises en oeuvre.

De tels ligands sont parfois préconisés dans les procédés de préparation de nanoparticules purement métalliques. On sait que, dans ce cas, ils peuvent influer sur la fom1e des nanoparticules métalliques obtenus. Néanmoins, du fait, comme indiqué ci-dessus, que les oxydes métalliques cristallins nanoparticulaires ne présentent pas les mêmes propriétés de pseudo-fluidité que les métaux nanoparticulaires, cet enseignement ne peut pas être transposé dans le cas d'une oxydation directe de l'organométallique. Là encore, l'influence d'un tel ligand dans le cadre de la présente invention ne trouve pas d'explication claire. Les inventeurs ont constaté dans le cas du zinc qu'un ligand amine (par exemple l'hexadécylamine) présent dans la solution liquide avant le commencement de la réaction d'oxydation entraîne éventuellement la formation d'un composé intermédiaire avec le précurseur organométallique, composé intermédiaire qui subirait l'attaque de l'oxydant et produirait des formes de nanoparticules d'oxyde cristallin différentes de celles résultant de l'attaque directe du précurseur organométallique par l'oxydant.

De préférence, dans un procédé selon l'invention, on utilise une quantité de ligand(s) équimolaire à celle des atomes de métal du(des) précurseur(s). Autrement dit, on utilise une quantité stoechiométrique de ligand(s) par rapport aux atomes de métal correspondants du(des) précurseur(s).

Avantageusement et selon l'invention, on choisit au moins un ligand non volatil à la température réactionnelle, faisant office de dispersant de la composition produite dans le milieu solvant. Ainsi, les nanoparticules d'oxyde(s) se trouvent spontanément à l'état dispersé (colloïde) dans la composition finale.

On peut laisser la solution liquide en présence du(des) ligand(s) reposer à l'abri de tout oxydant pendant une durée prédéterminée avant de réaliser l'oxydation. Cette durée peut être par exemple de plusieurs heures, notamment de lordre de 10h à 20h.
En variante, on peut réaliser l'oxydation immédiatement après la formation de la solution liquide. Le fait de laisser ou non la solution reposer influe aussi sur la forme et/ou la taille des nanoparticules obtenus. Par exemple, dans le cas de l'oxyde de zinc, en l'absence de repos, on obtient plutôt des nanoparticules de plus petites dimensions.

Pour obtenir des nanoparticules allongées, on utilise au moins un composé organique aliphatique (saturé ou insaturé) -notamment comprenant une chaîne aliphatique non ramifiée comportant entre 6 et 20 atomes de carbone- à titre de ligand. Avantageusement et selon l'invention, on utilise au moins un ligand choisi dans le groupe des amines -notamment des amines primaires (bien que de bons résultats puissent aussi être obtenus avec des amines secondaires ou tertiaires)-, des acides -notamment des acides carboxyliques-, des thiols, des dérivés du phosphore et des éthers. Avantageusement et selon l'invention, on utilise au moins un ligand choisi dans le groupe comprenant l'hexadécylamine, la dodécylamine, l'octylamine, le dodécylthiol, l'acide octanoïque, l'acide oléique, l'acide laurique.

Avantageusement et selon l'invention, on choisit au moins une base et au moins un acide à titre de ligands. Avantageusement et selon l'invention, on utilise au moins une amine à titre de base, notamment une amine primaire telle que mentionnée ci-dessus, et au moins un acide carboxylique.

L'utilisation d'un couple acide/base, permet notamment d'obtenir des supercristaux de nanoparticules, c'est-à-dire une organisation des nanoparticules en un réseau solide similaire à un réseau cristallin. Les proportions molaires d'acide, de base, et de précurseur peuvent varier. Des supercristaux de nanoparticules de ZnO ont été obtenus dans le THF avec les proportions molaires acide/base/précurseur de 0,5/1/1. Par ailleurs, des nanoparticules de ZnO ont été obtenues en l'absence de THF avec les proportions molaires acide oléique/octylamine/précurseur suivantes: 1/2/1 ; 0,5/2/1 ; 2,5/5/1 ; 0,5/5/1.

Avantageusement et selon l'invention, le milieu solvant non aqueux est aussi non alcoolique, c'est-à-dire est en outre exempt de composé présentant des fonctions hydroxyles réactives, de façon à éviter toute formation d'hydroxyde. En particulier, le milieu solvant non aqueux est avantageusement exempt (aux traces près) de fonctions alcool, et donc est exempt de composé alcool (primaire, secondaire ou tertiaire).

Avantageusement et selon l'invention, ledit milieu solvant comprend au moins deux composés distincts. En particulier, avantageusement et selon l'invention, ledit milieu solvant comprend au moins un ligand et au moins un composé volatil dans les conditions réactionnelles s'évaporant au fur et à mesure de l'oxydation. Dans une forme de réalisation avantageuse, ledit milieu solvant est formé de THF et d'une amine primaire aliphatique. Les proportions relatives de THF et d'amine primaire peuvent varier de 100%-0% à 0%-100%; selon la proportion choisie, la forme et/ou la taille des nanoparticules d'oxyde(s) métallique(s) cristallin(s) obtenues varieront.

D'autres composés faisant office de solvant peuvent être envisagés, par exemple l'anisol, l'heptane, le toluène. Le choix dépend en particulier du(des) précurseur(s) utilisé(s) et de l'(des) oxyde(s) métallique(s) formés.

Par ailleurs, selon l'invention, on peut utiliser au moins un ligand apte à former une solution liquide avec le (les) précurseur(s) lorsqu'il est mis au contact avec ce(ces) précurseur(s). Ainsi, le(les) ligand(s) fait (font) aussi office d'agent(s) solvant(s) pour la solution liquide, et il n'est pas nécessaire d'ajouter un autre agent solvant spécifique au milieu solvant. Par exemple, l'octylamine est liquide à température ambiante. De même, certains précurseurs à l'état solide à température ambiante et certains ligands solides à température ambiante tel que l'hexadécylamine, peuvent former par simple contact mutuel par mélange une solution liquide. En outre, avec un ligand solide à température ambiante, et si le(les) résidu(s) d'oxydation (par «résidu d'oxydation» on désigne tout produit de la réaction d'oxydation autre que l'(les) oxyde(s) métallique(s) et le milieu solvant) est(sont) volatil(s) ou solide(s), la composition obtenue après oxydation peut revenir spontanément à l'état solide puisque le précurseur qui forme la solution liquide avec le ligand a disparu.

Avantageusement et selon l'invention, on choisit chaque précurseur de telle sorte que chaque résidu d'oxydation formé à partir de ce précurseur soit volatil dans les conditions réactionnelles. Ainsi, dans un procédé selon l'invention, la réaction d'oxydation ne produit que des particules solides d'oxyde(s) métallique(s) et un(des) résidu(s) organique(s) volatil(s). Avec un milieu solvant volatil, et lorsque le(les) résidu(s) d'oxydation est(sont) volatil(s), la composition résultant de la réaction d'oxydation est solide. Elle peut être reprise dans un autre milieu solvant et fom1e alors une solution liquide colloïdale.

Avantageusement et selon l'invention, on utilise au moins un oxydant choisi parmi le dioxygène, la vapeur d'eau, les oxydants organiques, les autres oxydants non organiques.

A titre d'oxydants organiques, on peut citer par exemple les hydroperoxydes organiques et les oxydes d'amines tels que l'oxyde de triméthylamine. A titre d'oxydants non organiques, on peut citer par exemple le peroxyde d'hydrogène, l'oxyde de phosphore, l'oxyde de soufre, le dioxyde d'azote, l'ozone, le bioxyde de chlore, et les complexes métalliques porteurs d'au moins un atome d'oxygène (par exemple les complexes métal-peroxydes, les complexes métal-oxydes, les complexes métal-hydroperoxydes, les complexes métal- superoxydes, ...).

Avantageusement et selon l'invention, on réalise l'oxydation sans agitation de la solution liquide. Les traces d'eau que cette solution liquide peut renfermer peuvent faire office d'oxydant. La solution liquide est aussi mise au contact de l'air atmosphérique. En particulier, dans un mode de réalisation avantageux et selon l'invention, on utilise un agent solvant volatil, au moins un précurseur organométallique formant un résidu d'oxydation volatil, et on laisse la solution liquide au contact de l'air ambiant sans agitation. L'agent solvant s'évapore au fur et à mesure que l'air oxyde le précurseur en solution, et le résidu d'oxydation autre que l'oxyde métallique s'évapore. En réalité, il est possible que l'oxydation soit due aux seules traces d'eau solubilisées en provenance de l'agent solvant volatil de départ et de l'air ambiant (toujours humide). Il reste en final une composition solide d'oxyde métallique (avec éventuellement chaque ligand à la surface des nanoparticules).

D'autres oxydants que les traces d'eau solubilisées et/ou l'air ambiant peuvent être utilisés, notamment la vapeur d'eau, le dioxygène pur... Néanmoins, c'est un avantage du procédé de l'invention que de permettre la production spontanée de nanoparticules d'oxyde(s) cristallin(s) par simple mise au contact avec l'air ambiant.

Avantageusement et selon l'invention, pour la préparation de nanoparticules d'oxyde de zinc cristallin, on choisit le dicyclohexyl de zinc Zn(C₆H₁₁)₂, communément désigné ZnCy₂ à titre de précurseur. En présence d'hexadécylamine à titre de ligand en proportion équimolaire avec ce précurseur dans le THF et en réalisant 1'oxydation par l'air à température ambiante après 17h de repos préalable, on a obtenu un échantillon homogène de nanoparticules allongées dispersées d'oxyde de zinc cristallin (phase zincite) de 5 nm de largeur, 15 nm de longueur et ayant une distribution de taille étroite. Ces particules de semi-conducteur sont en outre photoluminescentes. De telles nanoparticules solubles en milieu organique présentent un intérêt industriel pratique considérable.

Avantageusement et selon l'invention, pour la préparation de nanoparticules d'oxyde d'étain cristallin, on choisit un précurseur parmi le bis bis diméthylamidure d'étain [Sn(N(CH₃)₂)₂]₂ et le dicyclopentadiènyl d'étain Sn(C₅H₅)₂.

Avantageusement et selon l'invention, pour la préparation d'oxyde d'indium, on choisit le cyclopentadiényl d'indium In(C₅H₅).

Avantageusement et selon I ' invention, pour la préparation d'un oxyde métallique mixte on choisit au moins deux précurseurs distincts dans le groupe formé parmi le dicyclohexyl de zinc Zn(C₆H₁₁)₂, le bis bis diméthylamidure d'étain [Sn(N(CH₃)₂)₂]₂, le dicyclopentadiényl d'étain Sn(C₅H₅)₂, le cyclopentadiényl d'indium In(C₅H₅).

L'invention permet d'obtenir une composition de nanoparticules d'au moins un oxyde métallique cristallin se présentant sous forme d'une solution liquide colloïdale, et ayant des formes et des dimensions correspondant à une distribution unimodale. L'invention se rapporte à une composition de nanoparticules d'au moins un oxyde métallique cristallin dispersées, esdites nanoparticules ayant des formes et des dimensions correspondant à une distributin unimodale et présentant une anisotropie de forme, ladite composition se présentant sous forme d'une solution liquide colloïdale et étant constituée de nanoparticules d'oxyde de zinc cristallin à structure hexagonale exempte d'hydroxyde cristallin. Aucun procédé connu antérieurement à la présente invention ne permet d'obtenir une telle composition. En particulier dans l'art antérieur, il n'est pas possible en pratique d'obtenir une telle composition d'oxyde(s) cristallin(s) à partir d'une composition de nanoparticules dispersées métalliques pures ou mixtes.

Selon l'invention, les nanoparticules présentent une anisotropie de forme (elles ne sont pas sphériques).
Avantageusement et selon l'invention, les nanoparticules ont une forme allongée avec une largeur moyenne inférieure à 50 nm et une longueur moyenne supérieure à deux fois la largeur moyenne. Avantageusement et selon l'invention, les nanoparticules présentent une largeur moyenne comprise entre 2 nm et 7 nm et une longueur moyenne comprise entre 10 nm et 20 nm. Selon l'invention, la composition est constituée de nanoparticules d'oxyde de zinc cristallin à structure hexagonale exempte d'hydroxyde cristallin.

L'invention concerne en outre un procédé et une composition caractérisés en combinaison par tout ou partie des caractéristiques mentionnées ci- dessus ou apparaissant ci-après.

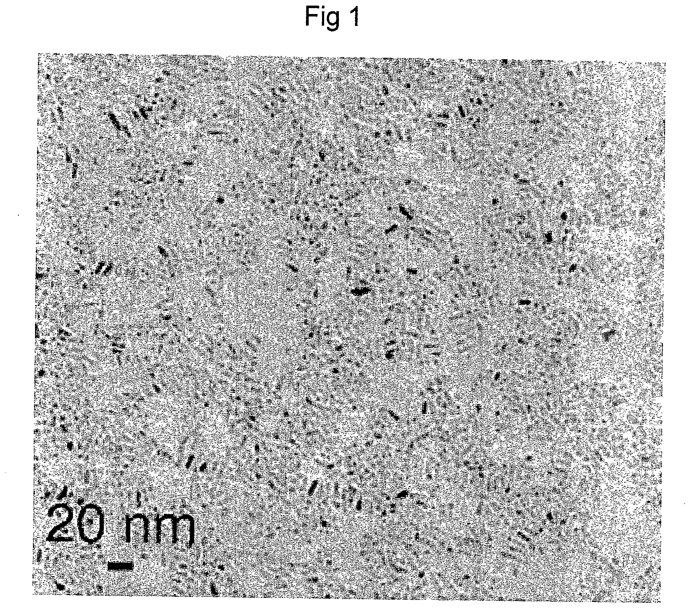

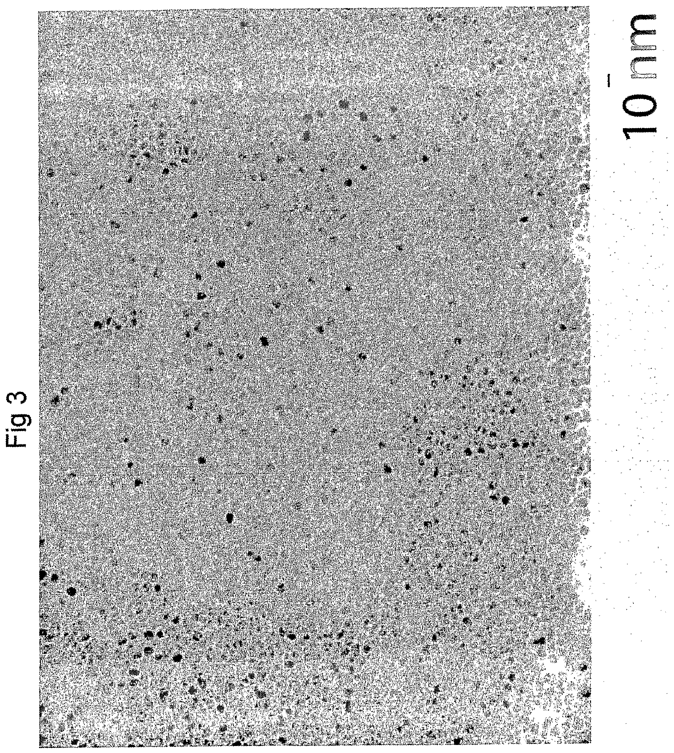

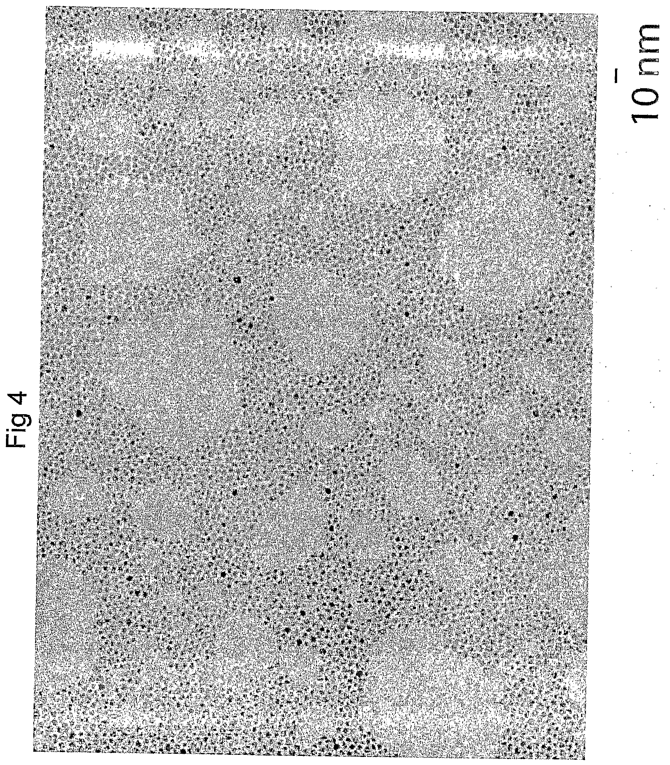

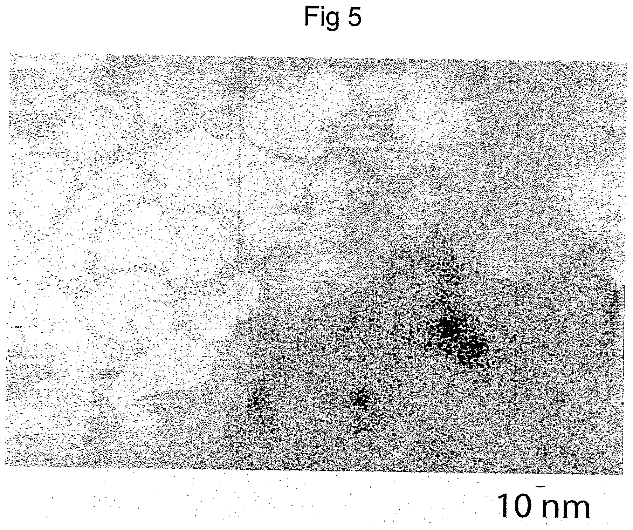

D'autres buts, caractéristiques et avantages de l'invention apparaissent à la lecture des exemples suivants et des figures 1 à 18 annexées qui représentent des vues microscopiques de compositions selon l'invention obtenues dans les exemples.

### Protocole général :

Une solution liquide équimolaire du(des) précurseur(s) et du(des) ligand(s) est préparée sous atmosphère d'argon. La concentration de chaque composé de départ dans cette solution est en général de 0,042 mol.l⁻¹ mais elle peut être modulée en fonction de la taille des nanoparticules souhaitées. La solution est laissée à l'abri de la lumière pendant une durée dl (par exemple 17h) sans agitation toujours sous argon (sans contact avec un oxydant). Ce temps d'attente dl peut être ajusté en fonction de la taille des nanoparticules désirées. Au bout de ce temps d'attente dl au repos, la solution est placée au contact de l'air ambiant et de l'humidité ambiante. Elle reste en contact avec l'air et l'humidité ambiante pendant une durée d2 qui correspond généralement au temps nécessaire pour l'évaporation totale du solvant, lorsque celui-ci est suffisamment volatil à température ambiante.

Dans le cas où le solvant n'est pas complètement évaporé au bout de quelques jours, on constate que des nanoparticules d'oxyde métallique cristallin sont formées.

Lorsque le solvant est suffisamment volatil, et est totalement évaporé, un produit solide correspondant à un échantillon d'oxyde métallique cristallin est obtenu. Dans le cas particulier de ZnO, lorsque le solvant n'est pas assez volatil pour être complètement évaporé, la formation des nanoparticules peut être vérifiée en irradiant sous UV (λ = 312 nm) la solution qui devient luminescente. D'une façon générale, toutes les solutions liquides colloïdales obtenues de ZnO présentent des propriétés de luminescence. Lorsqu'un échantillon solide est obtenu, la diffraction sur poudre de cet échantillon permet de vérifier la phase cristalline obtenue. Dans le cas de ZnO, le diffractogramme obtenu correspond à du ZnO en phase zincite hexagonale ayant le groupe d'espace P6₃ mc. Des pics de diffraction additionnels correspondent à des espèces organiques. Ces espèces ont été caractérisées par RMN en solution et correspondent au(x) ligand(s) présent(s) à la surface des particules. Dans le cas des solutions liquides colloïdales, la diffraction électronique des échantillons déposés sur grille de microscopie, permet de vérifier la cristallinité des nanoparticules. Dans tous les exemples, des nanoparticules cristallines ont été obtenues. Ces grilles de microscopie sont préparées en déposant une goutte de la solution liquide colloïdale sur la grille. L'utilisation de la microscopie électronique à transmission, TEM, permet également d'observer la taille, la forme et l'homogénéité des nanoparticules formées. Dans tous les exemples, des solutions liquides colloïdales ont pu être obtenues. L'état de surface de ces nanoparticules a été étudié par RMN en solution et la présence du(des) ligand(s) introduit(s) dans le milieu réactionnel a été constatée. Dans le cas des amines, une coordination via la fonction NH₂ a pu être mise en évidence. Les nanoparticules synthétisées par cette méthode fom1ent des entités se comportant comme tout produit chimique classique et possèdent par exemple une concentration à saturation pour laquelle l'on passe d'une solution colloïdale à une suspension turbide. Cette concentration est intrinsèque à chaque système. A partir de ces solutions colloïdales, il est possible de former des monocouches de nanoparticules qui ont tendance à s'auto-organiser.

### EXEMPLE 1 :

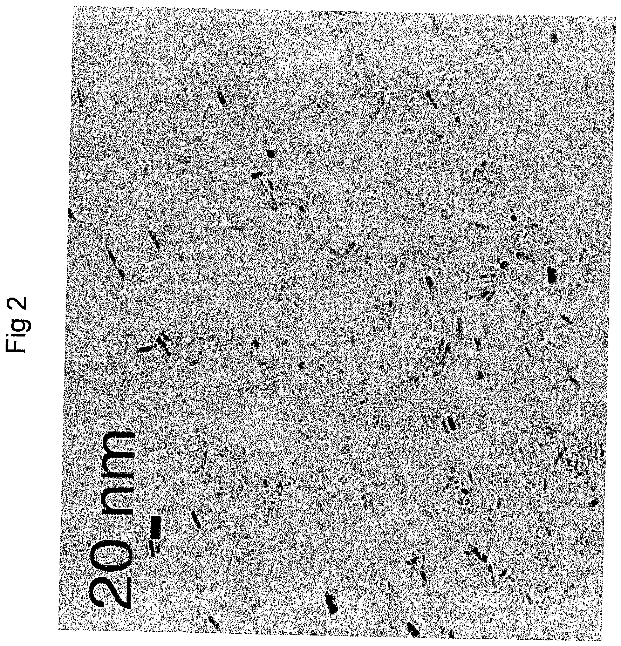

Dans cet exemple, on évalue l'effet de la concentration initiale sur les nanoparticules obtenues.
Une solution dans le THF équimolaire (0,042 mol.l⁻¹) du précurseur de zinc, ZnCy₂, en présence du ligand hexadécylamine, HDA, est préparée dans un réacteur de type Shlenck sous atmosphère contrôlée d'argon. Elle est ensuite laissée à l'abri de la lumière pendant 17h sans agitation, puis le réacteur est ouvert et placé au contact de l'air et de l'humidité ambiants. Lorsque le THF est complètement évaporé, un solide blanc est obtenu. Ce solide peut être à nouveau dissous dans quelques millilitres de THF et une solution liquide colloïdale est obtenue. Dans ces conditions des nanobâtonnets de 10 nm x5 nm de taille moyenne sont obtenus (figure 1). Lorsque cette expérience est effectuée dans les mêmes conditions mais avec une solution initiale ayant une concentration de précurseur égale à 0,125 mol.l⁻¹ des nanobâtonnet(s) plus longs (15nm x 5 nm) sont obtenus (figure 2).

### EXEMPLE 2:

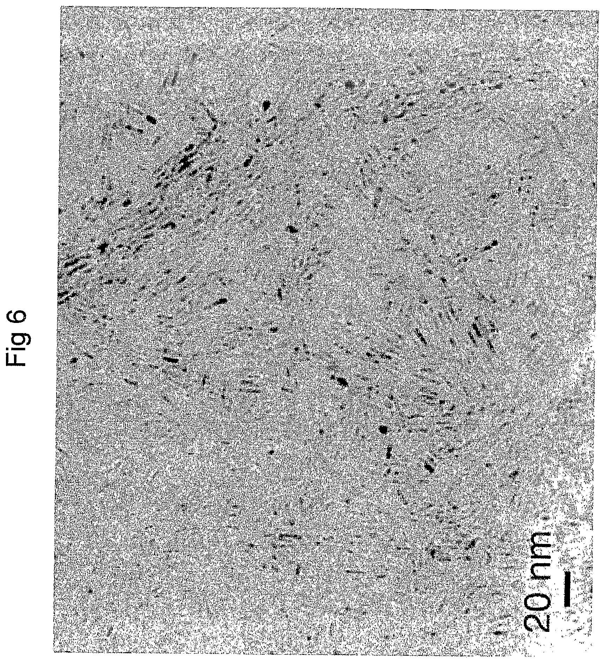

Dans cet exemple, on évalue l'effet du solvant choisi sur les nanoparticules obtenues.
L'expérience de l'exemple 1 (figure 1) est effectuée dans les mêmes conditions mais en utilisant respectivement le toluène, l'heptane ou l'anisole à la place du THF pour former la solution initiale. Des nanosphère(s) respectivement de 13 nm (figure 3), 7 nm (figure 4) et 14 nm (figure 5) sont obtenues.
Il est à noter qu'il est aussi possible d'appliquer un procédé selon l'invention en l'absence de solvant soit si le(s) ligand(s) utilisés est(sont) liquide(s), soit si la mise en contact du précurseur avec le(s) ligand(s) entraîne la formation d'une solution liquide d'un complexe intermédiaire ainsi qu'il a pu être mis en évidence dans le cas de ZnCy₂ en présence de ligand possédant une fonction amine pour lesquels un complexe de type ZnCy₂(RNH₂) a pu être identifié par RMN. En effet, cet intermédiaire peut avoir un point de fusion tel qu'il est liquide à température ambiante. Dans les conditions de concentration standard (0,042 mol.l⁻¹), avec ZnCy₂ comme précurseur, et avec différentes amines des nanobâtonnet(s) ont pu être synthétisés. La longueur de ces nanobâtonnet(s) dépend de la longueur de la chaîne de l'amine utilisée à titre de ligand. Par exemple, dans le cas de la HDA des nanobâtonnet(s) de 15 nm x 2 mn ont été obtenus (figure 6) alors que dans le cas de l'octylamine, OA des nanobâtonnet(s) de 10 nm x 3 nm ont été synthétisés (figure 7).

### EXEMPLE3:

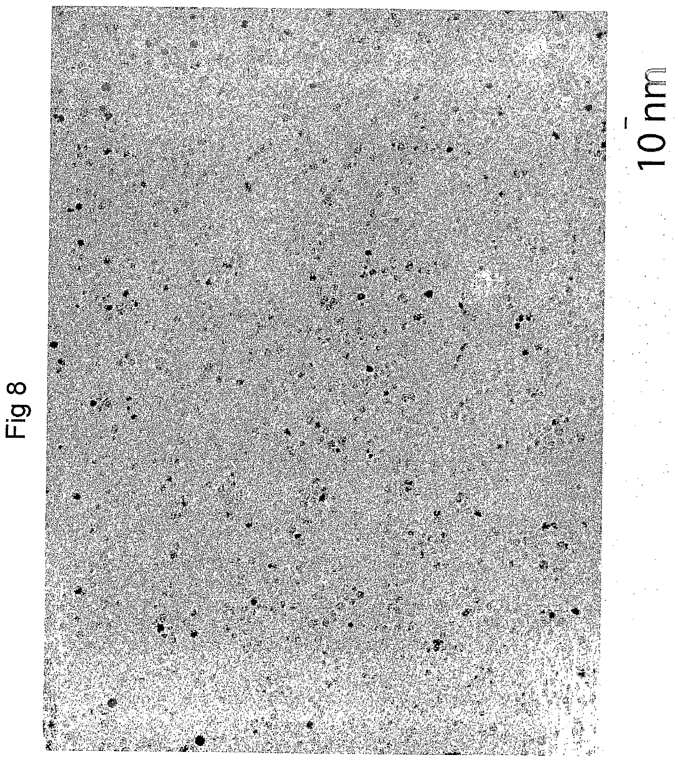

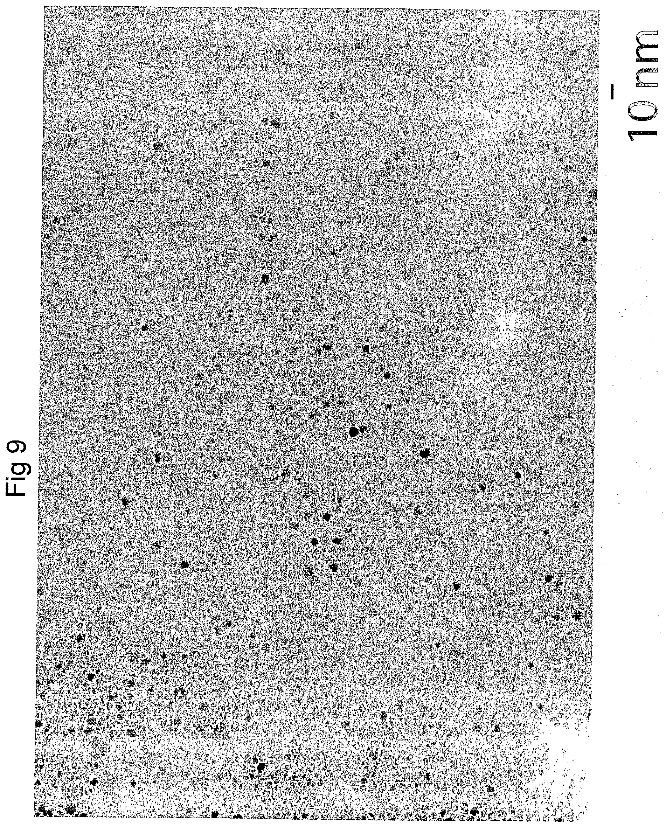

Dans cet exemple, on évalue l'effet de la longueur de la chaîne aliphatique du ligand sur les nanoparticules obtenues. Dans le cas de la HDA, des nanobâtonnet(s) ont été obtenus alors que pour de plus courtes longueurs de chaîne des nanosphère(s) ont été obtenues. Le ligand influe donc sur la forme des nanoparticules. Mais la longueur de la chaîne influe également sur la taille de nanoparticules. Ainsi, lorsque la longueur de la chaîne aliphatique du ligand diminue, la taille des nanosphère(s) obtenues augmente.
Une solution dans le THF équimolaire (0,042 mol.l⁻¹) du précurseur de zinc, ZnCy₂, en présence du ligand dodécylamine, DDA, est préparée dans un réacteur de type Shlenck sous atmosphère contrôlée d'argon. Elle est ensuite laissée à l'abri de la lumière pendant 17h sans agitation, puis le réacteur est ouvert et placé au contact de l'air et de l'humidité ambiants. Lorsque le THF est complètement évaporé, un solide blanc est obtenu. Ce solide peut être à nouveau dissous dans quelques millilitres de THF et une solution liquide colloïdale est obtenue. Dans ces conditions des nanosphère(s) de 9 nm de taille moyenne sont obtenues (figure 8). Cette expérience est renouvelée dans les mêmes conditions mais avec l'octylamine OA à titre de ligand. Des nanosphère(s) de 12 nm sont alors observées (figure 9).

### EXEMPLE4:

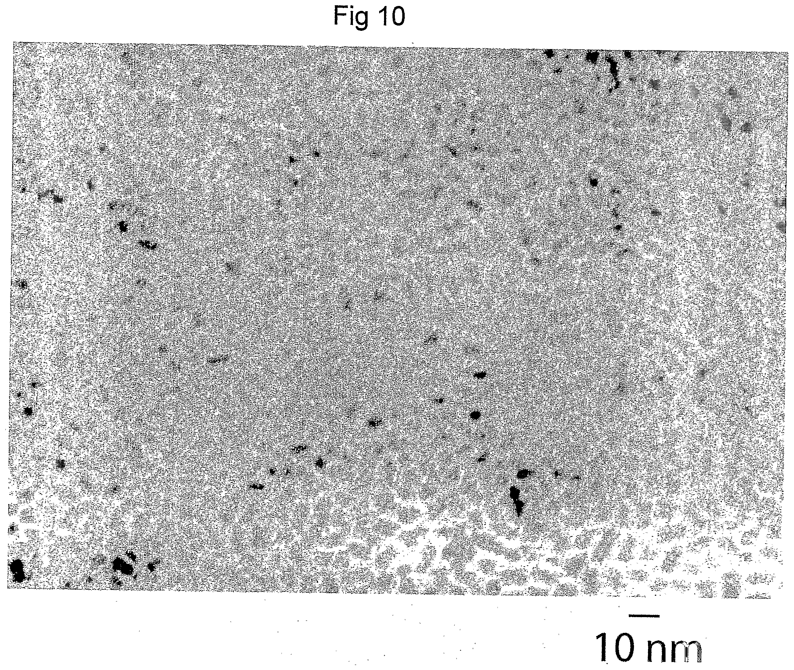

Dans cet exemple, on évalue l'effet du temps de repos dl de la solution initiale sous atmosphère inerte d'argon (avant oxydation) sur les nanoparticules obtenues. Ce paramètre intervient sur la taille des nanoparticules.
Dans l'exemple 1 avec la solution à 0,042 mol.l⁻¹ et avec dl =17h, des nanobâtonnet(s) de 10 nm x 5 nm de taille moyenne sont obtenus (figure 1). Cette expérience est renouvelée dans les mêmes conditions mais avec un temps de repos dl nul. Des nanobâtonnet(s) de 16 nm x 7 nm de taille moyenne sont alors obtenus (figure 10).

### EXEMPLE 5:

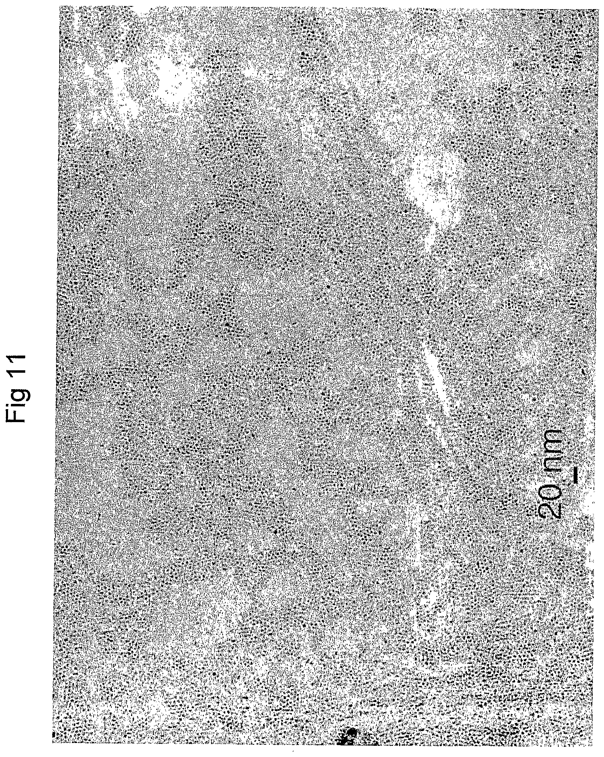

Dans cet exemple, on évalue l'effet du temps d'exposition à l'air et l'humidité ambiants sur les nanoparticules obtenues. Ce paramètre intervient dans l'homogénéité des nanoparticules synthétisées. Par exemple, une solution dans le THF équimolaire (0,042 mol/l) du précurseur de zinc, ZnCy₂, en présence du ligand hexadécylamine, HDA, est préparée dans un réacteur de type Shlenck sous atmosphère contrôlée d'argon. Elle est ensuite laissée à l'abri de la lumière pendant 17h sans agitation, puis le réacteur est ouvert et placé au contact de l'air et de l'humidité ambiants. Au bout de 24h, l'évaporation n'est pas encore totale, l'échantillon est constitué à la fois de nanosphère(s) de 3nm et de nanobâtonnet(s) de 5 nm x 2 nm. Après 72h, l'échantillon est uniquement constitué de nanobâtonnet(s) de 15 nm x 5 nm de taille moyenne (figure 11).

### EXEMPLE6:

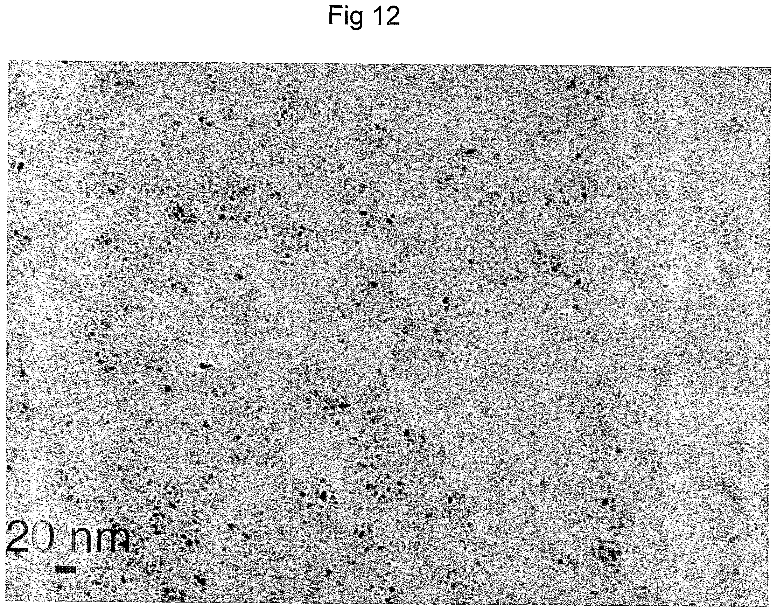

Dans cet exemple, on évalue l'effet de la température de réaction sur les nanoparticules obtenues. Les exemples 1 à 5 donnent de bons résultats à température ambiante. En présence d'un solvant (THF), les nanoparticules synthétisées sont moins homogènes et de taille moyenne sensiblement plus petite. Dans les conditions de l'exemple 2 (figure 6) à température ambiante, des nanobâtonnet(s) de 15 nm x 2 nm de taille moyenne sont obtenus. Lorsque cette expérience est renouvelée dans les mêmes conditions mais à une température de 46°C, l'échantillon est constitué à la fois de nanosphère(s) de 5 nm et de nanobâtonnet(s) de 10 nm x 5 nm (figure 12).

### EXEMPLE 7:

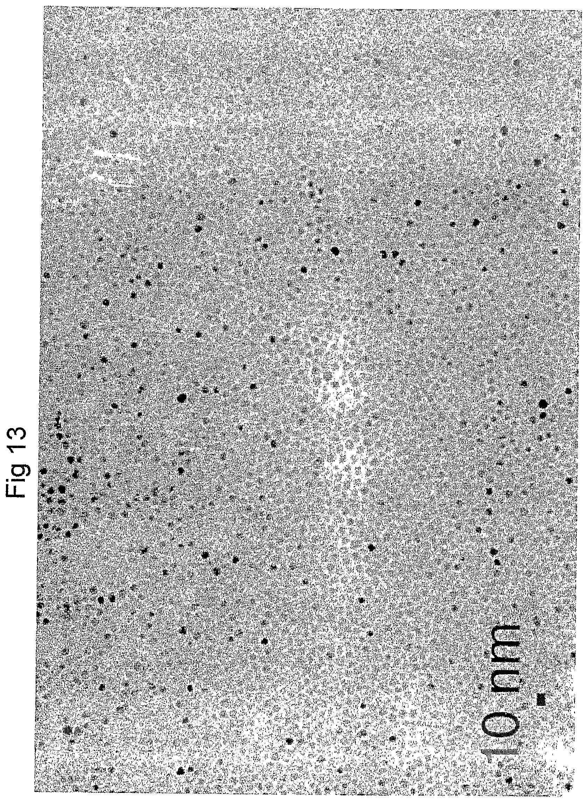

Dans cet exemple, on évalue l'effet de la cinétique d'oxydation/évaporation du solvant sur les nanoparticules obtenues. Ce paramètre influe à la fois sur la forme et sur la taille des nanoparticules synthétisées. Dans les conditions de l'exemple 1 (figure 1) des nanobâtonnet(s) de 10 nm x 5 nm de taille moyenne sont obtenus. Lorsque cette expérience est renouvelée dans les mêmes conditions mais en équipant le réacteur d'un septum percé d'une canule de 1mm de diamètre et de 3cm de longueur, la cinétique d'oxydation en même temps que l'évaporation du solvant sont beaucoup plus lentes. Au bout de deux semaines en solution, des nanosphère(s) de 7 nm sont obtenues (figure 13).

### EXEMPLE 8 : Oxyde d'étain

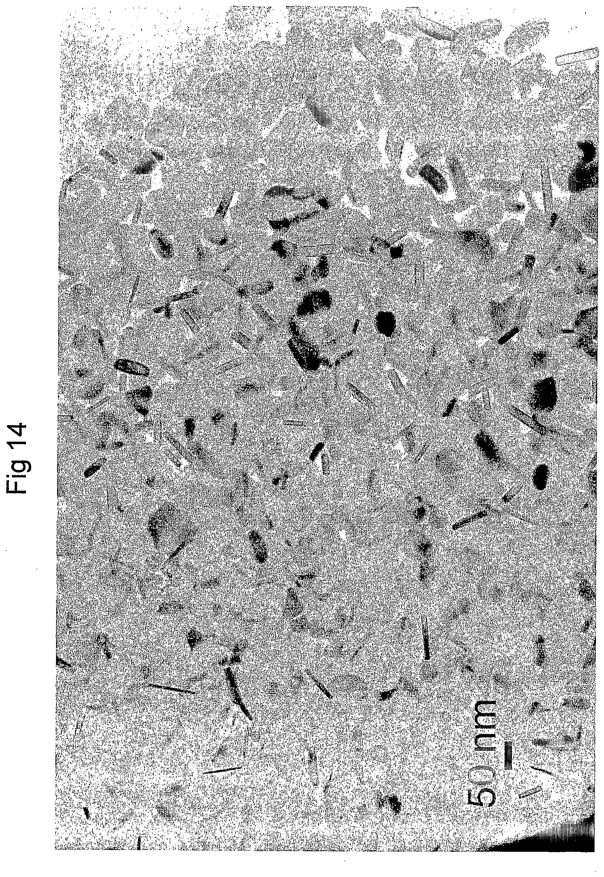

Une solution dans le THF équimolaire (0,042 mol.l⁻¹) du précurseur d'étain [Sn(N(CH₃)₂)₂]₂ en présence du ligand hexadécylamine, RDA, est préparée dans un réacteur de type Shlenck sous atmosphère contrôlée d'argon. Elle est ensuite laissée à l'abri de la lumière pendant 17h sans agitation, puis le réacteur est ouvert et placé au contact de l'air et de l'humidité ambiants. Lorsque le THF est complètement évaporé, un solide blanc est obtenu. Ce solide peut être à nouveau dissous dans quelques millilitres de THF et une solution liquide colloïdale est obtenue. Dans ces conditions, des nanoparticules cristallines de taille environ 50 nm présentant des facettes sont obtenues (figure 14).

### EXEMPLE 9: oxydes mixtes

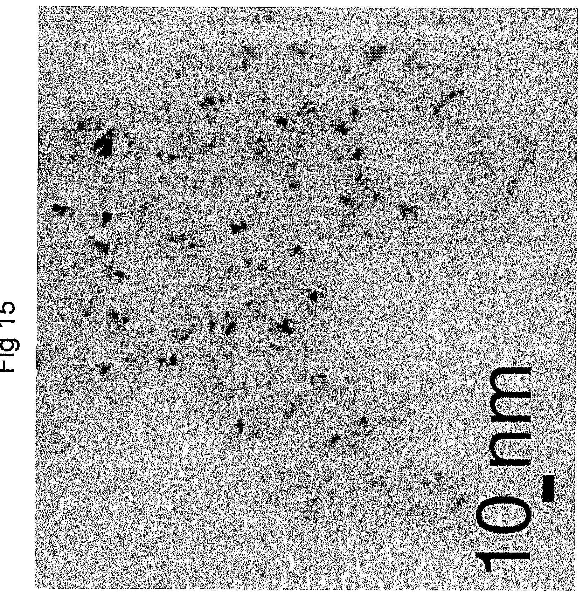

On prépare des oxydes mixtes en suivant la même procédure que dans l'exemple 8 avec une solution dans le THF équimolaire contenant le précurseur de zinc, ZnCy₂ (0,021 mol.l^{-l} ainsi que le précurseur d'étain, Sn(N(CH₃)₂)₂]₂ (0,021 mol.l⁻¹ en équivalent d'atomes d'étain) en présence du ligandhexadécylamine, HDA (0,042 mol.l⁻¹). Dans ces conditions,des nanoparticules cristallines de taille inférieure à 10 nm présentant des facettes sont obtenues (figure 15).

### EXEMPLE 10: Mélange acide/amine comme ligands

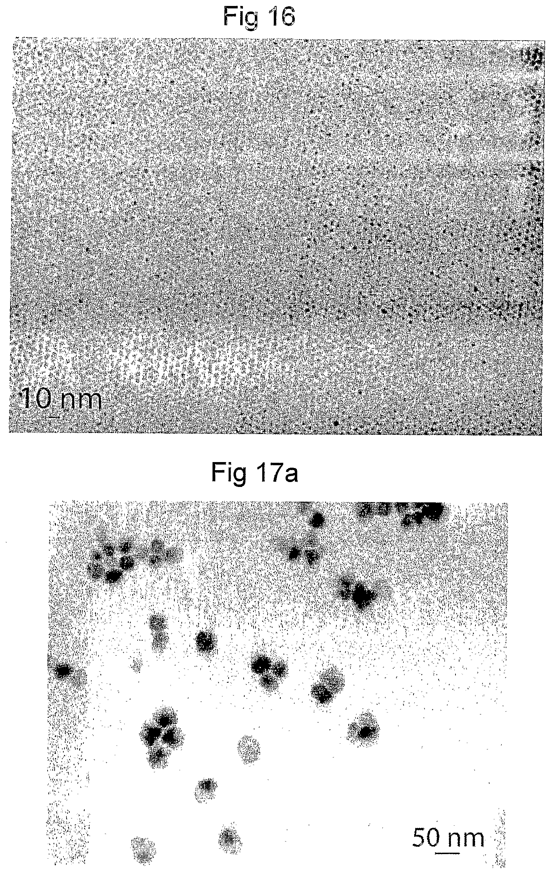

Une solution dans le THF contenant du précurseur de zinc, ZnCy₂, en présence de ligands comprenant une amine (hexadécylamine HDA, ou octylamine OA) et un acide carboxylique, est préparée dans un réacteur de type Shlenck sous atmosphère contrôlée d'argon dans les proportions molaires précurseur/amine/acide 1/1/0,5 et avec une concentration en précurseur de 0,042 mol.l⁻¹
Elle est ensuite laissée à l'abri de la lumière pendant 17h sans agitation, puis le réacteur est ouvert et placé au contact de l'air et de l'humidité ambiants. Lorsque le THF est complètement évaporé, un solide blanc est obtenu. Ce solide peut être à nouveau dissous dans une quantité suffisante de THF et une solution liquide colloïdale est obtenue. Dans ces conditions, des nanoparticules cristallines sont obtenues. La figure 16 représente les résultats obtenus avec HDA.
Le tableau ci-dessous regroupe les tailles de nanoparticules obtenues pour différents couples acide/amine dans le THF(en nm) :

| | acide octanoïque | acide oléique | acide laurique |
|---|---|---|---|
| HDA | 3,5 | 3,1 | 2,8 |
| OA | 3,2 | 3,7 | 3,2 |

Les mêmes couples acide/OA ont été utilisés en absence de THF et des nanoparticules de ZnO ont également été obtenues. Par ailleurs, des proportions différentes en acide et amine ont également été testées et des nanoparticules de ZnO ont également été obtenues. Le tableau ci-dessous regroupe les différentes proportions testées.

| ZnCy₂ | octylamine | acide oléique |
|---|---|---|
| 1 | 2 | 1 |
| 1 | 2 | 0,5 |
| 1 | 5 | 2,5 |
| 1 | 5 | 0,5 |

### EXEMPLE 1 1 : Mélange acide/amine comme ligands, obtention de supercristaux de particules.

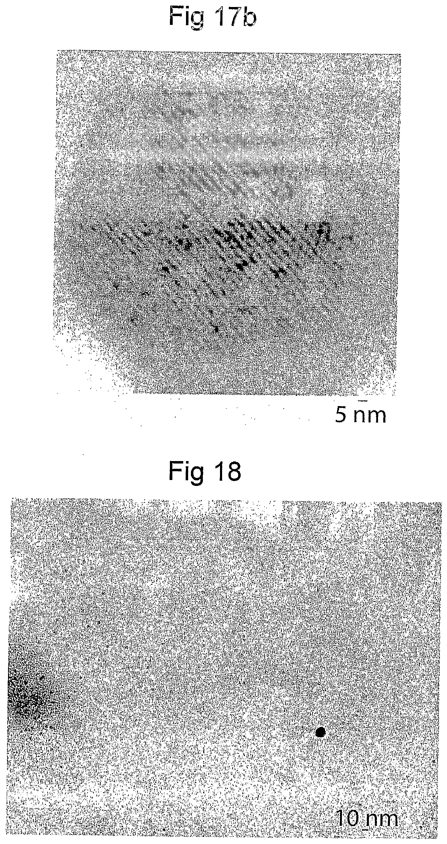

Une solution dans le THF contenant du précurseur de zinc, ZnCy2, en présence des ligands hexadécylamine, HDA, et acide laurique, AL, est préparée dans un réacteur de type Shlenck sous atmosphère contrôlée d'argon dans les proportions Précurseur/Amine/Acide 1/1/0,5 et une concentration en précurseur de 0,042 mol.l⁻¹ Elle est ensuite laissée à l'abri de la lumière pendant 17h sans agitation, puis le réacteur est ouvert et placé au contact de l'air et de l'humidité ambiants. Lorsque le THF est complètement évaporé, un solide blanc est obtenu. Ce solide peut être repris dans une quantité suffisante de THF pour préparer l'échantillon de microscopie électronique de façon à ne pas redissoudre les supercristaux. Dans ces conditions, des supercristaux constitués de nanoparticules cristallines de 2,8 nm sont obtenues (figures 17a et 17b).
Il est à noter que lorsque les ligands acide/amine sont utilisés,les supercristaux sont obtenus dans tous les cas et que c'est la quantité de solvant utilisée pour la préparation de la grille de microscopie qui pem1 et de redissoudre les cristaux et d'obtenir les particules sous forme de pavage (figure 16) ou bien de conserver les supercristaux (figures 17a et 17b). Ces expériences ont été effectuées avec les amines et acides suivants: hexadécylamine HDA, dodécylamine DDA et octylamine OA couplées avec l'acide octanoïque AO, l'acide laurique AL, et l'acide oléique AOI.

### EXEMPLE 12 : Oxyde d'indium

Une solution dans le THF équimolaire (0,042 mol.l⁻¹) du précurseur d'indium In(C₅H₅) en présence du ligand hexadécylamine HDA, est préparée dans un réacteur de type Shlenck sous atmosphère contrôlée d'argon. Elle est ensuite laissée à l'abri de la lumière pendant 17h sans agitation, puis le réacteur est ouvert et placé au contact de l'air et de l'humidité ambiants. Lorsque le THF est complètement évaporé, un solide orange-marron est obtenu. Ce solide peut être à nouveau dissous dans quelques millilitres de THF et une solution colloïdale limpide est obtenue. Dans ces conditions, des nanoparticules d'oxyde d'indium In₂O₃ de 4,8 nm sont obtenues (figure 18).

## Revendications

1. Procédé de préparation d'une composition de nanoparticules d'au moins un oxyde métallique cristallin à partir d'au moins un précurseur organométallique, **caractérisé en ce que**:
- on choisit un(des) précurseur(s) spontanément réactif(s) à l'oxydation dans le groupe des précurseurs organiques des éléments comprenant le zinc, le cadmium, le bore, l'aluminium, le gallium, l'indium, le thallium, le germanium, l'étain, le titane, le zirconium, l'hafnium, les lanthanides (Ce, Pr, Nd, Sm, Eu, Gd, Tb, Dy, Ho, Er, Tm, Yb, Lu), le scandium, l'yttrium, le silicium, le bismuth et les autres métaux de transition,
- on réalise une solution liquide de ce(ces) précurseur(s) dans un milieu solvant non aqueux,
- on met cette solution liquide en contact avec au moins un oxydant dans des conditions réactionnelles adaptées pour entraîner directement la production de nanoparticules d'oxyde(s) métallique(s) cristallin(s),
dans lequel on réalise l'oxydation à pression ambiante et à une température comprise entre 0°C et 50°C, ladite température étant inférieure à 50°C.

2. Procédé selon la revendication 1, dans lequel le milieu solvant comprend au moins un composé, dit ligand, choisi parmi les bases et les acides.

3. Procédé selon la revendication 2, dans lequel on choisit au moins un ligand non volatil à la température réactionnelle, faisant office de dispersant de la composition produite dans le milieu solvant.

4. Procédé selon l'une des revendications 2 ou 3, dans lequel on utilise un composé organique aliphatique à titre de ligand.

5. Procédé selon la revendication 4, dans lequel on utilise un composé organique comprenant une chaîne aliphatique non ramifiée comportant entre 6 et 20 atomes de carbone à titre de ligand.

6. Procédé selon l'une des revendications 2 à 5, dans lequel on utilise au moins un ligand choisi dans le groupe des aminés, des acides, des thiols, des dérivés du phosphore et des éthers.

7. Procédé selon la revendication 6, dans lequel on utilise au moins un ligand choisi dans le groupe comprenant l'hexadécylamine, la dodécylamine, l'octylamine, le dodécylthiol, l'acide octanoïque, l'acide oléique, l'acide laurique.

8. Procédé selon l'une des revendications 2 à 7, dans lequel on choisit au moins une base et au moins un acide à titre de ligands.

9. Procédé selon l'une des revendications 1 à 8, dans lequel ledit milieu solvant comprend au moins deux composés distincts.

10. Procédé selon les revendications 2 et 9, dans lequel ledit milieu solvant comprend au moins un ligand et au moins un composé volatil dans les conditions réactionnelles s'évaporant au fur et à mesure de l'oxydation.

11. Procédé selon la revendication 10, dans lequel ledit milieu solvant est formé de THF et d'une amine primaire aliphatique.

12. Procédé selon l'une des revendications 1 à 11, dans lequel on utilise au moins un oxydant choisi parmi le oxygène, la vapeur d'eau, les oxydants organiques, les autres oxydants non organiques.

13. Procédé selon l'une des revendications 1 à 12, dans lequel on réalise l'oxydation sans agitation de la solution liquide.

14. Procédé selon l'une des revendications 1 à 13, dans lequel ledit milieu solvant est non alcoolique.

15. Procédé selon l'une des revendications 1 à 14, dans lequel, pour la préparation de nanoparticules d'oxyde de zinc cristallin, on choisit le dicyclohexyl de zinc Zn(C₆H₁₁)₂ à titre de précurseur.

16. Procédé selon l'une des revendications 1 à 15, dans lequel pour la préparation de nanoparticules d'oxyde d'étain, on choisit un précurseur parmi le bis bis diméthylamidure d'étain [Sn(N(CH₃)₂)₂]₂ et le dicyclopentadiènyl d'étain Sn(C₅H₅)₂.

17. Procédé selon l'une des revendications 1 à 16, dans lequel pour la préparation d'oxyde d'indium, on choisit le cyclopentadiényl d'indium In(C₅H₅) à titre de précurseur.

18. Procédé selon l'une des revendications 1 à 17, dans lequel pour la préparation d'un oxyde métallique mixte on choisit au moins deux précurseurs distincts dans le groupe formé parmi le dicyclohexyl de zinc Zn(C₆H₁₁)₂, le bis bis diméthylamidure d'étain [Sn(N(CH₃)₂)₂]₂, le dicyclopentadiènyl d'étain Sn(C₅H₅)₂, le cyclopentadiényl d'indium In(C₅H₅).

19. Composition de nanoparticules d'au moins un oxyde métallique cristallin dispersées, lesdites nanoparticules ayant des formes et des dimensions correspondant à une distribution unimodale et présentant une anisotropie de forme, ladite composition se présentant sous forme d'une solution liquide colloïdale et étant constituée de nanoparticules d'oxyde de zinc cristallin à structure hexagonale exempte d'hydroxyde cristallin.

20. Composition selon la revendication 19, dans laquelle les nanoparticules ont une forme allongée avec une largeur moyenne inférieure à 50 nm et une longueur moyenne supérieure à deux fois la largeur moyenne.

21. Composition selon la revendication 20, dans laquelle les nanoparticules présentent une largeur moyenne comprise entre 2 nm et 7 nm et une longueur moyenne comprise entre 10 nm et 20 nm.

## Patentansprüche

1. Verfahren zur Herstellung einer Zusammensetzung von Nanopartikeln mindestens eines kristallinen Metalloxids ausgehend von mindestens einem metallorganischen Präkursoren, **dadurch gekennzeichnet, dass**:
- Auswählen eines (von) Präkursors(en), der (die) auf die Oxidation in der Gruppe der organischen Präkursoren der Elemente spontan reaktiv sind, umfassend Zink, Kadmium, Bor, Aluminium, Gallium, Indium, Tallium, Germanium, Zinn, Titan, Zirkonium, Hafnium, Lanthanide (Ce, Pr, Nd, Sn, Eu, Gd, Tb, Dy, Ho, Er, Tn, Yb, Lu), Scandium, Yttrium, Silicium, Bismuth und die anderen Übergangsmetalle,
- Herstellen einer flüssigen Lösung dieses (dieser) Präkursors(en) in einem nicht wässrigen Lösungsmedium,
- Inkontaktbringen dieser flüssigen Lösung mit mindestens einem Oxidationsmittel bei Reaktionsbedingungen, die angepasst sind, direkt die Herstellung von Nanopartikeln eines kristallinen Metalloxids (kristalliner Metalloxide) herbeizuführen,
bei dem die Oxidation bei Umgebungsdruck und bei einer Temperatur durchgeführt wird, die zwischen 0°C und 50°C liegt, wobei die Temperatur kleiner als 50°C ist.

2. Verfahren nach Anspruch 1, bei dem das Lösungsmedium mindestens eine Verbindung, genannt Ligand, ausgewählt aus den Basen und den Säuren, enthält.

3. Verfahren nach Anspruch 2, bei dem mindestens ein nicht volatiler Ligand bei der Reaktionstemperatur ausgewählt wird, der als Dispergiermittel der in dem Lösungsmedium erzeugten Zusammensetzung fungiert.

4. Verfahren nach einem der Ansprüche 2 oder 3, bei dem eine aliphatische organische Verbindung als Ligand verwendet wird.

5. Verfahren nach Anspruch 4, bei dem eine organische Verbindung als Ligand verwendet wird, die eine nicht verzweigte aliphatische Kette enthält, die zwischen 6 und 20 Kohlenstoffatome enthält.

6. Verfahren nach einem der Ansprüche 2 bis 5, bei dem mindestens ein Ligand ausgewählt aus der Gruppe der Amine, Säuren, Thiole, Phosphorderivaten und Ethern verwendet wird.

7. Verfahren nach Anspruch 6, bei dem mindestens ein Ligand verwendet wird ausgewählt aus der Gruppe, die Hexadecylamin, Dodecylamin, Octylamin, Dodecylthiol, Octansäure, Oleinsäure, Laurinsäure umfasst.

8. Verfahren nach einem der Ansprüche 2 bis 7, bei dem mindestens eine Base und mindestens eine Säure als Liganden gewählt werden.

9. Verfahren nach einem der Ansprüche 1 bis 8, bei dem das Lösungsmedium mindestens zwei unterschiedliche Verbindungen enthält.

10. Verfahren nach den Ansprüchen 2 und 9, bei dem das Lösungsmedium mindestens einen Liganden und mindestens eine bei den Reaktionsbedingungen volatile Verbindung, die sich während der Oxidation verflüchtigt, enthält.

11. Verfahren nach Anspruch 10, bei dem das Lösungsmedium aus THF und einem aliphatischen Primäramin gebildet wird.

12. Verfahren nach einem der Ansprüche 1 bis 11, bei dem mindestens ein Oxidationsmittel ausgewählt aus Sauerstoff, Wasserdampf, organischen Oxidationsmitteln, den anderen nicht organischen Oxidationsmitteln, verwendet wird.

13. Verfahren nach einem der Ansprüche 1 bis 12, bei dem die Oxidation ohne Rühren der flüssigen Lösung durchgeführt wird.

14. Verfahren nach einem der Ansprüche 1 bis 13, bei dem das Lösungsmedium nichtalkoholisch ist.

15. Verfahren nach einem der Ansprüche 1 bis 14, bei dem für die Herstellung von Nanopartikeln des kristallinen Zinkoxids Zinkdicyclohexyl Zn(C₆H₁₁)₂ als Präkursor ausgewählt wird.

16. Verfahren nach einem der Ansprüche 1 bis 15, bei dem für die Herstellung von Nanopartikeln des Zinnoxids ein Präkursor aus bis bis-Dimethylamid des Zinns [Sn(N(CH₃)₂)₂]₂ und Dicyclopentadien des Zinns Sn(C₅H₅)₂ ausgewählt wird.

17. Verfahren nach einem der Ansprüche 1 bis 16, bei dem für die Herstellung von Indiumoxid Indiumcyclopentadien In(C₅H₅) als Präkursor ausgewählt wird.

18. Verfahren nach einem der Ansprüche 1 bis 17, bei dem für die Herstellung eines gemischten Metalloxids mindestens zwei unterschiedliche Präkursoren aus der Gruppe, gebildet aus Zinkdicyclohexyl Zn(C₆H₁₁)₂, bis bis-Zinndimethylamid [Sn(N(CH₃)₂)₂]₂, Zinndicyclopentadien Sn(C₅H₅)₂, Indiumcyclopentadien In(C₅H₅) ausgewählt werden.

19. Zusammensetzung von Nanopartikeln aus mindestens einem dispergiertem kristallinen Metalloxid, wobei die Nanopartikel Formen und Abmessungen entsprechend einer unimodalen Verteilung und eine Formanisotropie aufweisen, wobei die Zusammensetzung sich in Form einer kolloidalen flüssigen Lösung darstellt und aus Nanopartikeln des kristallinen Zinkoxids mit hexagonaler Struktur ohne kristallinem Hydroxid gebildet wird.

20. Verbindung nach Anspruch 19, bei der die Nanopartikel eine langgestreckte Form mit einer mittleren Breite kleiner als 50 nm und einer mittleren Länge größer als zweimal die mittlere Breite aufweisen.

21. Zusammensetzung nach Anspruch 20, bei der die Nanopartikel eine mittlere Breite zwischen 2 nm und 7 nm und eine mittlere Länge zwischen 10 nm und 20 nm aufweisen.

## Claims

1. Process for the preparation of a composition of nanoparticles of at least one crystalline metal oxide starting from at least one organometallic precursor, **characterised in that**:
- there is(are) chosen (a) precursor(s) that is(are) spontaneously reactive to oxidation from the group of the organic precursors of the elements comprising zinc, cadmium, boron, aluminium, gallium, indium, thallium, germanium, tin, titanium, zirconium, hafnium, the lanthanides (Ce, Pr, Nd, Sm, Eu, Gd, Tb, Dy, Ho, Er, Tm, Yb, Lu), scandium, yttrium, silicon, bismuth and the other transition metals,
- a liquid solution of the precursor(s) in a non-aqueous solvent medium is prepared,
- the liquid solution is brought into contact with at least one oxidising agent under reaction conditions adapted to cause the production of nanoparticles of crystalline metal oxide(s) directly,
wherein the oxidation is carried out at ambient pressure and at a temperature of between 0°C and 50°C, said temperature being below 50°C.

2. Process according to claim 1, wherein the solvent medium comprises at least one compound, called a ligand, chosen from the bases and the acids.

3. Process according to claim 2, wherein there is chosen at least one ligand that is not volatile at the reaction temperature, which acts as a dispersing agent for the composition produced in the solvent medium.

4. Process according to either claim 2 or claim 3, wherein an aliphatic organic compound is used as the ligand.

5. Process according to claim 4, wherein an organic compound having an unbranched aliphatic chain containing between 6 and 20 carbon atoms is used as the ligand.

6. Process according to any one of claims 2 to 5, wherein there is used at least one ligand chosen from the group of the amines, the acids, the thiols, the phosphorus derivatives and the ethers.

7. Process according to claim 6, wherein there is used at least one ligand chosen from the group comprising hexadecylamine, dodecylamine, octylamine, dodecylthiol, octanoic acid, oleic acid, lauric acid.

8. Process according to any one of claims 2 to 7, wherein there are chosen at least one base and at least one acid as ligands.

9. Process according to any one of claims 1 to 8, wherein said solvent medium comprises at least two separate compounds.

10. Process according to any one of claims 2 to 9, wherein said solvent medium comprises at least one ligand and at least one compound that is volatile under the reaction conditions and gradually evaporates during the oxidation.

11. Process according to claim 10, wherein said solvent medium is formed of THF and an aliphatic primary amine.

12. Process according to any one of claims 1 to 11, wherein there is used at least one oxidising agent selected from oxygen, water vapour, the organic oxidising agents, the other non-organic oxidising agents.

13. Process according to any one of claims 1 to 12, wherein the oxidation is carried out without stirring the liquid solution.

14. Process according to any one of claims 1 to 13, wherein said solvent medium is non-alcoholic.

15. Process according to any one of claims 1 to 14, wherein, for the preparation of nanoparticles of crystalline zinc oxide, dicyclohexyl zinc Zn(C₆H₁₁)₂ is chosen as the precursor.

16. Process according to any one of claims 1 to 15, wherein, for the preparation of nanoparticles of tin oxide, a precursor is chosen from bis(bis(dimethylamide)tin) [Sn(N(CH₃)₂)₂]₂ and dicyclopentadienyl tin Sn(C₅H₅)₂.

17. Process according to any one of claims 1 to 16, wherein, for the preparation of indium oxide, cyclopentadienyl indium In(C₅H₅) is chosen as the precursor.

18. Process according to any one of claims 1 to 17, wherein, for the preparation of a mixed metal oxide, there are chosen at least two separate precursors from the group formed by dicyclohexyl zinc Zn(C₁H₁₁)₂ bis(bis(dimethylamide)tin) [Sn(N(CH₃)₂)₂]₂, dicyclopentadienyl tin Sn(C₅H₅)₂, cyclopentadienyl indium In(C₅H₅).

19. Composition of dispersed nanoparticles of at least one crystalline metal oxide, said nanoparticles having shapes and dimensions corresponding to a unimodal distribution and having anisotropy of shape, said composition being in the form of a colloidal liquid solution and being composed of nanoparticles of crystalline zinc oxide having a hexagonal structure free of crystalline hydroxide.

20. Composition according to claim 19, wherein the nanoparticles have an elongate shape with an average width of less than 50 nm and an average length of greater than twice the average width.

21. Composition according to claim 20, wherein the nanoparticles have an average width of between 2 nm and 7 nm and an average length of between 10 nm and 20 nm.
